# EUROPEAN PATENT SPECIFICATION

(11) **EP 4 069 602 B1**
(45) Date of publication and mention of the grant of the patent: **08.01.2025**
(21) Application number: 20829686.3
(22) Date of filing: 01.12.2020
(51) Int. Cl.: B65D 30/00, B65D 30/08, B65D 33/01, B65D 81/34, B65D 85/36, B65D 75/26

(54) **PACKAGING WRAPPER FOR GLUTEN-FREE FOOD PRODUCTS AND METHODS OF MANUFACTURING OF THE WRAPPER AND BAKING/COOKING OF THE FOOD PRODUCT**
VERPACKUNGSHÜLLE FÜR GLUTENFREIE LEBENSMITTELPRODUKTE UND VERFAHREN ZUR HERSTELLUNG DER VERPACKUNG UND ZUM BACKEN/KOCHEN DES LEBENSMITTELS
MATÉRIAU D'ENVELOPPEMENT D'EMBALLAGE POUR PRODUITS ALIMENTAIRES SANS GLUTEN ET MÉTHODES DE FABRICATION DE L'EMBALLAGE ET DE CUISSON DU PRODUIT ALIMENTAIRE

(30) Priority: 02.12.2019 IT 201900022737
(43) Date of publication of application: 12.10.2022
(73) Proprietor: Dr. Schär S.P.A., 39014 Postal (IT)
(72) Inventor: CERNE, Virna Lucia, 34011 DUINO-AURISINA (IT); POLENGHI, Ombretta, 34136 TRIESTE (IT)
(74) Representative: Petraz, Davide Luigi
(86) International application number: PCT/IT2020/050297
(87) International publication number: WO 2021/111485

(56) References cited:
- EP-A1- 1 031 515
- EP-A1- 3 028 953
- WO-A1-2020/104958
- WO-A1-2020/104958
- CH-A- 316 308
- DE-A1- 3 420 129
- DE-U1- 202006 002 072
- IT-A1- UA20 162 337
- US-A- 2 997 224

## Description

### FIELD OF THE INVENTION

The present invention concerns a packaging wrapper for food products. More particularly, the invention concerns a packaging wrapper for allergen-free food products, even more particularly for gluten-free food products, such as bread or other baked products, either leavened, savory or sweet, such as pizza, focaccia, crackers, breadsticks, snacks, sweet snacks or suchlike, supplied in large-scale distribution. The packaging wrapper can be used with both baked food products and also raw food products to be cooked after purchase. The present invention also concerns a method to produce such a packaging wrapper and a method to cook gluten-free food products in an oven.

### BACKGROUND OF THE INVENTION

In the industrial preparation of foods such as bread, a widespread method provides to prepare the bread, pre-bake the bread, freeze the pre-baked bread and dispatch the frozen bread to the point of sale. Subsequently the bread is baked again to obtain fresh bread, just out of the oven, to be distributed to customers.

The above procedure can also be followed for the preparation of allergen-free food products, in particular gluten-free bread. This type of bread is wrapped in a packaging wrapper, so as not to come into contact with allergens that can be found in the ovens used, or in other food products distributed at the point of sale. For example, to avoid contamination from other food products, allergen-free food products are displayed separately from other food products, even if they are of the same type (for example bread).

The packaging wrapper can be a source of problems, in particular that of retaining the steam that develops inside it during the baking of bread. The steam retained is then reabsorbed by the bread, which therefore does not maintain its crunchy properties, typical of so-called fresh bread, that is, just out of the oven, which make the bread very palatable for the consumer.

To overcome this problem, packaging wrappers have been developed that are at least partly formed by a type of paper impermeable to allergens, but which still allow the passage of air. These types of wrappers allow the product to be kept in a controlled and allergen-free environment, but are not always able to satisfactorily resist the heat differences of this process and the baking temperatures of the bread in the oven.

Document CH 316 308 A describes a package for packing leavened baked products that are still hot, which comprises a filter permeable to air and humidity.

Document US 2 997 224 A describes a sheet of material for making packaging wrappers or containers to contain articles to be sterilized. The sheet is made of a material that prevents the passage of gas and moisture and has a limited width area provided with an adhesive coating sensitive to heat and pressure. The area has spaced apertures and a strip of flexible material having a limited ability to transmit gas and moisture, which is heat-sealed along the edges of this area only, so that the wrapper or container thus made has a limited ability to breathe.

Document DE 34 20 129 A1 describes a multilayer packaging material for food or spices, formed by a first layer of plastic material, which forms the outside of the packaging material, and a second layer of filter paper which forms the inside of the packaging material.

Document EP 1 031 515 A1 describes a composite and transpirant sheet for packaging foodstuffs, such as bread or vegetables. The sheet provides a first layer of plastic material which extends over the entire usable surface of the sheet and a second layer which extends only over one portion, leaving one or more free transparent portions glued to the first layer and made of porous paper-based material. The first layer has a perforation to allow the exchange of moisture.

Document EP 3 028 953 A1 describes a strip of material for producing bags for products such as fruit and vegetables, formed by a continuous plastic sheet on which there is at least one window, and a continuous reticular sheet connected to the plastic sheet by gluing or heat-sealing, present on the side that, during use, is intended for the inside of the bag, in contact with the products.

There is therefore a need to perfect a packaging wrapper for food products that can overcome at least one of the disadvantages of the state of the art.

In particular, one purpose of the present invention is to provide a packaging wrapper for food products which is able to guarantee the safety of the food product, in particular by blocking allergens and gluten.

Within the scope of this aim, another purpose of the invention is to provide a packaging wrapper that also allows to discharge the steam from the inside of the wrapper to the outside, so as to preserve the crunchiness of the bread for a certain time after cooking.

Another purpose of the present invention is to provide a packaging wrapper for food products that can withstand the temperatures of the process, in particular the baking temperatures of the bread in the oven, but also temperature differences between the freezing step, in which the temperature is typically around -18°C, and baking in the oven, in which the temperature is typically higher than 200°C.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, the Applicant has produced a packaging wrapper for food products which comprises a multilayer sheet formed by at least one polymeric layer which has at least one aperture, and a filter layer that covers such apertures.

According to the invention, the layer of filter material is coupled, by means of adhesive, to the layer of polymeric material.

Advantageously, the filter layer consists of filter paper. Preferably, such filter paper is made of cellulose and/or other natural fibers.

According to the invention, the filter material has a thickness between 50 and 200 µm.

The filter material is of the porous type. The size of the pores, that is, of the apertures, is between 1 and 100 µm . The filter material consists of a plurality of overlapping fibrous layers. The hermetic seal against contamination is given by the overlapping of such fibrous layers with a thickness such that the apertures are statistically covered. The calculated thickness value currently in use (and validated for resistance to contamination) is between 50 and 200 µm. A filter with these characteristics is such as to prevent the passage of allergens, including gluten in particular, as well as microbiological contamination.

In some embodiments, the polymeric material, the filter material and the adhesive are resistant to temperatures up to at least 200°C, preferably up to 220°C, for a period of between 5 and 30 minutes, preferably between 10 and 20 minutes.

The wrapper as above is suitable for baking said gluten-free food products in an oven.

In some embodiments, the polymeric material, the filter material and the adhesive are resistant to differences in temperature from -30°C to 250°C for an interval of time from 0 to 2 minutes, in particular from 0 to 30 seconds.

In one embodiment, the filter paper is glued in strips over the polymeric layer, so as to leave some zones of polymeric material uncovered and thus allow an optimal heat sealing during the step of packaging the food product.

Advantageously, the layer of filter material is distanced by two opposite edges of the multilayer sheet so as to leave uncovered two flaps of polymeric material. Even more advantageously, the uncovered flaps of polymeric material are disposed longitudinally with respect to the direction of feed of the multilayer sheet during the production of the packaging wrapper.

Preferably, the multilayer sheet comprises two layers of filter material disposed on a same plane and distanced from each other so as to leave uncovered an intermediate zone of polymeric material.

In another embodiment, the filter paper is disposed between two polymeric layers, so as to obtain a wrapper with greater mechanical strength.

Preferably, the polymeric material is transparent, so as to allow the food product inside the wrapping to be seen.

The present invention also concerns a packaging wrapper of the type described above, containing inside it a food product.

The invention also concerns a method to produce the packaging wrapper containing the food product. The method provides a flow pack type method with the multilayer sheet as above, at the base of the packaging wrapper.

Other embodiments concern a packaging comprising at least one gluten-free food product packaged in a packaging wrapper as described here.

### BRIEF DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a perspective view of a packaging wrapper according to the present invention;
- figs. 2 and 3 are plan views, respectively of two surfaces of a sheet for producing the packaging wrapper of fig. 1;
- fig. 4 is a section view of the sheet of figs. 2 and 3 taken along section line IV-IV of fig. 3;
- fig. 5 is a section view of the sheet of figs. from 2 to 4 during a first production step of the wrapper of fig. 1;
- fig. 6 is a lateral view of the sheet of figs. from 2 to 4 during a second production step of the wrapper of fig. 1; and
- fig. 7 is a section view of a second embodiment of the sheet for producing the wrapper of fig. 1.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the possible embodiments of the invention, of which one or more examples are shown in the attached drawings. Each example is supplied by way of illustration of the invention and shall not be understood as a limitation thereof.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

Embodiments described here concern a packaging wrapper for baking gluten-free food products, generally frozen, in an oven, without gluten contamination and maintaining crunchiness. The embodiments described here generally provide that the wrapper comprises a layer of filter material coupled, by means of adhesive, to a layer of polymeric material, the whole being resistant to a temperature of at least 200°C, possibly even up to 220°C.

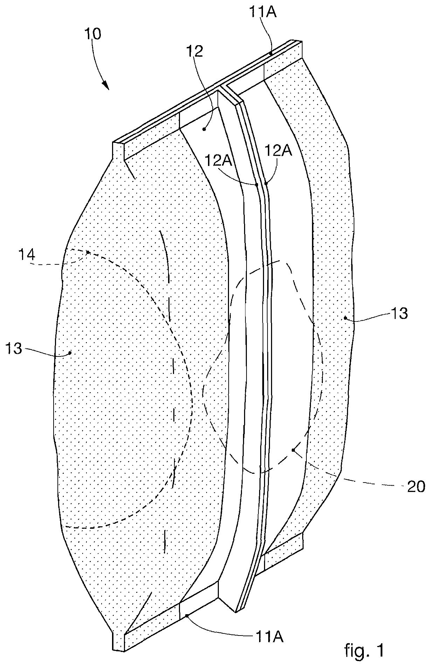

With reference to fig. 1, this shows a first embodiment of the packaging wrapper 10 for allergen-free food products, even more particularly for gluten-free food products, such as bread or other baked products made from leavened dough, savory or sweet, such as pizza, focaccia, crackers, breadsticks, sweet and/or savory snacks or suchlike, offered in large-scale distribution. The packaging wrapper 10 can also be used with raw products made from leavened dough, to be cooked after purchase.

In fig. 1, the wrapper is represented in its finished form, that is, shaped, sealed and containing a food product 20 such as bread or other product made from leavened dough and without gluten in it.

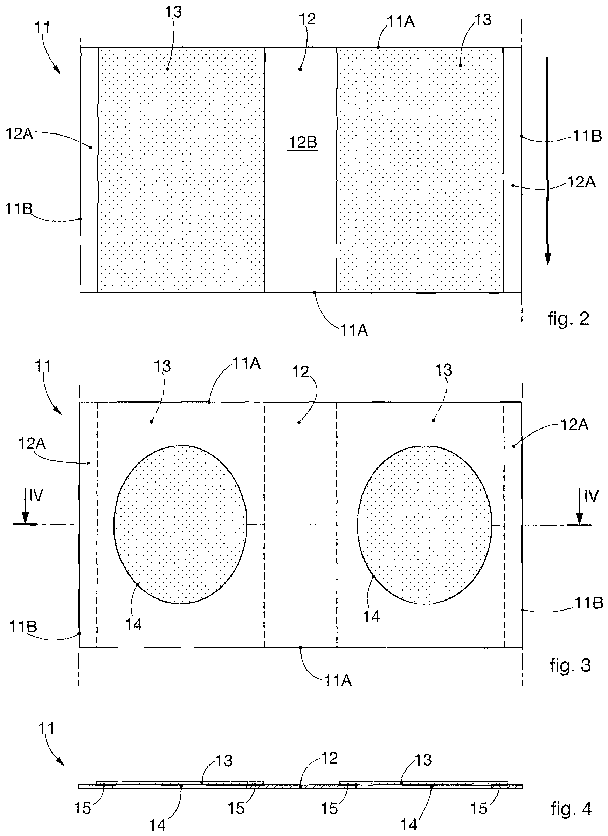

The wrapper 10 is made by means of a multilayer sheet 11 that comprises a layer of polymeric material 12 and at least one layer of filter material 13 coupled to it (see also figs. 2 and 3).

The layer of polymeric material 12, which is airtight, has at least one shaped aperture 14, for example two apertures 14 with an elliptical shape. Clearly, the number, shape and sizes of such apertures can vary according to requirements.

The filter material 13, also known as filter paper, is coupled to the polymeric material 12 so as to completely cover the apertures 14. In the example shown, the sheet 11 comprises two layers of filter material 13, each coupled in correspondence with a different zone, so as to each cover two respective apertures 14. It is noted that the two layers of filter material 13 are coupled on a same surface of the layer of polymeric material 12 (fig. 4).

The sheet 11 as shown in figs. 2 and 3 is substantially rectangular in shape and is delimited by two reciprocally opposite transverse edges 11A, disposed horizontally in figs. 2 and 3, and two longitudinal edges 11B reciprocally opposite each other and inclined, preferably perpendicular, with respect to the two transverse edges 11A. The transverse 11A and longitudinal edges 11B are designated relative to the direction of feed of the sheet 11 during the production of the wrapper 10, said direction being represented by the arrow in fig. 2.

Each layer of filter material 13 is preferably rectangular in shape and advantageously covers the layer of polymeric material 12 from one transverse edge 11A to the other, but not from one longitudinal edge 11B to the other. It is in fact advisable to provide that the layers of filter material 13 have a smaller width than the distance between the two longitudinal edges 11B and that they be disposed so as to leave uncovered at least two longitudinal flaps 12A of polymeric material 12 located along a respective longitudinal edge 11B of the sheet 11.

The two layers of filter material 13 are also distanced from each other so as to define an uncovered intermediate zone 12B of the polymer layer. This uncovered intermediate zone 12B is preferably located substantially centrally with respect to the longitudinal edges 11B of the sheet 11, so that when the wrapper is formed said intermediate zone 12B is in a substantially central position on one side of the wrapper 10 (fig. 1).

It should be noted that, obviously, the layers of filter material 13 can have different shapes and sizes, for example they can be such as to cover only one respective aperture 14 and one zone adjacent thereto, without necessarily extending from one transverse edge 11A of the sheet 11 to the other. In this way, it is also possible to delimit two transverse flaps of polymeric material 12, not shown in the drawings.

The layer of polymeric material 12 is preferably transparent, so that the food product 20 can be seen inside the wrapper 10 when it is closed. The polymeric material consists of one or more layers of PET, PA, cast PP or coextruded PP. Preferably, the polymeric material comprises PET with a Mylar coating. Generally, the layer of polymeric material 12 is punched.

The filter material 13 preferably comprises at least 80% by weight of a fibrous material, in particular natural fibers, more particularly cellulose. The basis weight of the filter material 13 is between 30 and 90 g/m², preferably between 40 and 70 g/m², even more preferably between 48 and 51 g/m². The layer of filter material 13 preferably has a thickness between 50 and 200 µm, more preferably between 60 and 100 µm, even more preferably substantially equal to 85 µm. The layer of filter material 13 can have different conformations and mechanical strengths according to the conformation which it is to be given, for example a smooth, rough or crinkled conformation. Amongst these, the rough conformation and the crinkled conformation are preferred, since they provide a greater filtration area and offer high filtration speeds. The crinkled conformation also offers a higher capacity to retain particulates than smooth paper.

The filter material 13 may also comprise other natural fibers, for example alpaca fibers, and/or artificial fibers, such as rayon fibers.

The filter material 13 is of the porous type, and has pores, that is, apertures, the size of which is preferably less than 150 µm, more preferably equal to 100 µm or less, even more preferably between 1 and 100 µm.

The filter material consists of a plurality of overlapping fibrous layers. A filter with this particular configuration is such as to prevent the passage of allergens, including gluten in particular, as well as microbiological contamination.

The filter material has a permeability to air such that water vapor is allowed to pass, which determines the crunchiness of the food product.

The porosity of the filter material 13 is such as to prevent the passage of allergens, including gluten in particular, as well as microbiological contamination.

The layers of filter material 13 are coupled to the layer of polymeric material 12, preferably by means of gluing using one or more layers of adhesive 15 (fig. 4). The layers of adhesive 15 are located at least along the edges of the apertures 14 of the polymeric material 12, but preferably the adhesive 15 is applied over the entire surface where the layer of polymeric material 12 and the layer of filter material 13 overlap.

The adhesive advantageously consists of a dispersion in a water-based solvent, alcohol, a single-component polyester-based adhesive or a bio-component adhesive with polyester and reagent.

Favorably, the layer of filter material 13 is glued to the external surface of the polymeric material 12 so as to suitably cover the aperture 14, or the apertures 14 if more than one. The external surface of the polymeric material 12 is the surface of the polymeric material 12 opposite the internal surface of the polymeric material 12 normally in contact with the food product, that is, the external surface, in normal use, is not facing toward the food product present in the wrapper 10.

Preferably, the layer of filter material 13 is glued on to the external surface of the polymeric material 12 and only along the perimeter edge of the aperture 14, or the apertures 14 if more than one, so as to overlap with the polymeric material 12 only as much as is necessary to be able cover the respective aperture 14 from the outside.

The polymeric material 12, the filter material 13 and the adhesive 15 are resistant both to sudden changes in temperature from -30°C to 250°C, and also to high temperatures, that is, the temperatures commonly used to bake bread in an oven, typically for an interval of time from 0 to 2 minutes, in particular from 0 to 30 seconds. Typically, these temperatures are higher than 150°C, more particularly higher than 200°C, for example they can reach 220°C, for a period of time between 5 and 30 minutes, preferably between 10 and 20 minutes. This resistance to heat can be obtained by means of a chemical treatment of a type known in the field. It is advisable to carry out a treatment to cross-link the polymeric structure of the cellulose.

The wrapper 10 is preferably made starting from a sheet 11 as shown in figs. 2 and 3, by means of a flow pack type process, widely known in the field.

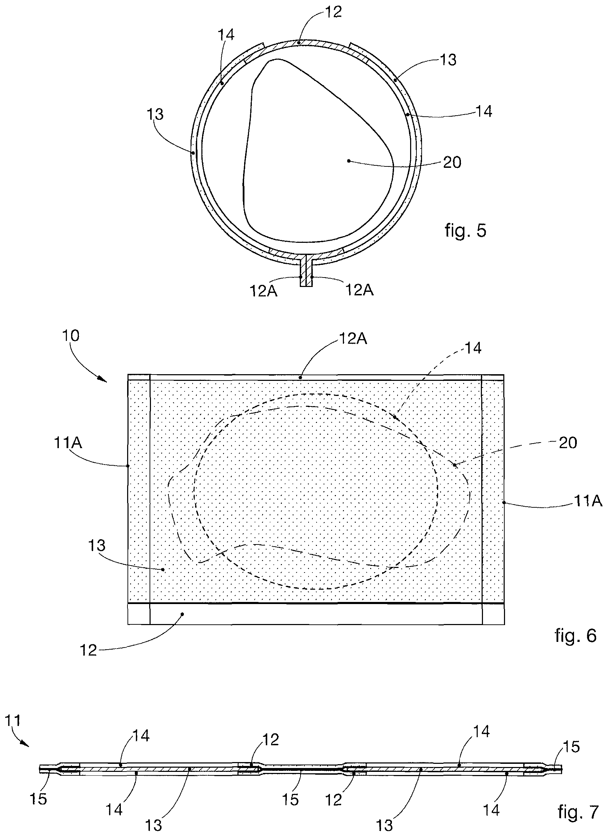

Figs. 5 and 6 show two steps of this process. It is noted that in figs. 5 and 6 the wrapper 10 is made with the filter material 13 disposed on the external surface. It is obviously possible to provide that the filter material 13 is disposed inside the wrapper 10.

Thanks to the polymeric material 12 and the filter material 13, the wrapper 10 effectively prevents the passage of allergens, in particular gluten, from the outside to its inside. It therefore becomes possible to freeze and cook the food product in industrial equipment (freezers, ovens) without the risk of contamination. It can also be provided to display the gluten-free food product at the point of sale next to other food products of the same type.

Moreover, thanks to the particular configuration of the filter material 13, the steam that develops inside the wrapper while the food product is cooked flows out of the wrapper 10. The organoleptic properties of the food product 20, in particular its crunchiness, in the case of freshly baked gluten-free bread, are preserved for a predetermined period of time starting from the cooking of the product.

Fig. 7 shows a second embodiment of the multilayer sheet 11. In this second embodiment, the layers of filter material 13 are disposed between two overlapping layers of polymeric material 12. Both layers of polymeric material 12 are provided with respective apertures 14, overlapping each other and therefore entirely covered by a respective layer of filter material 13. Providing two layers of polymeric material 12, between which the filter material 13 is interposed, allows to have a sheet 11 that is stronger and more resistant to sudden changes in temperature.

The adhesive 15 is applied in the contact zones between polymeric material 12 and filter material 13, in particular around the apertures 14, preferably also in the contact zones between the two layers of polymeric material 12, for example in correspondence with the longitudinal flaps 12A and with the intermediate zone 12B between the two layers of filter material 13.

### EXPERIMENTAL, DATA

We have analyzed the crunchiness of a gluten-free bread baked in a wrapper 10 specimen as described above.

The analysis was performed by means of a TA-AT2i texture analyzer with a P75 flat type probe, in order to have a greater contact surface on the bread crust.

The analysis graph contains the time in seconds on the x-axis and the force expressed in grams on the y-axis. During the analysis, the probe compresses the bread, and this increases the force. If the bread is crunchy, the compression causes cracks on the external surface. The slight change in force during these breakages creates typical spikes on the graph's force line. The linear distance is the function that calculates the length of an imaginary line that joins all the points on the graph comprised between the point in which the force curve begins (that is, when the probe touches and begins to compress the sample) and the point in which the experiment ends (generally after about 5 seconds). The more peaks are present, the greater the crunchiness and the greater the numerical value of the linear distance.

The parameters measured and taken into account in the evaluation of crunchiness are therefore:
- the force, expressed in grams, intended as the maximum force to compress the sample;
- the linear distance joining all the points in the selected region from zero to about 5 seconds. This quantity, expressed by the above function, has arbitrary units of measurement.

### EXAMPLE 1 - crunchiness analysis 30 minutes after the loaves were removed from the oven

The analysis was performed 30 minutes after 8 loaves were removed from the oven, each baked in a respective wrapper according to the invention. More precisely, the procedure provides to place the 8 frozen gluten-free bread samples, each wrapped in a respective wrapper as described here, in the oven at 200°C for 10 minutes, to remove them and let them cool down at room temperature for 30 minutes. Then the wrapper is removed and the whole loaf of bread is positioned under the probe of the texture analyzer. The operation was repeated for all 8 bread samples made. The samples have an average force of 4900g and an average linear distance of 57.

These values, however, are in line with the analysis by texture analyzer of a fresh loaf of wheat bread analyzed a few hours after purchase, having an average force of 4500 g and an average linear distance of 49. These values differ greatly from those obtained from the analysis by texture analyzer of a loaf of bread packaged in modified atmosphere which has an average force of 1800 g and a linear distance of 19. The following Table 1 reports the results obtained for gluten-free frozen bread packaged with a wrapper described here, bread packaged in modified atmosphere and fresh wheat bread.

| Table 1 | | |
|---|---|---|
| Sample | Force (g) | Linear distance |
| Gluten-free bread packaged frozen with a wrapper described here | 4900 | 57 |
| Bread packaged in modified atmosphere | 1830 | 19 |
| Fresh wheat bread | 4547 | 49 |

The optimal crunchiness values or parameters correspond to a force between 2500 and 6000 g, a linear distance between 25 and 90. The values obtained during the tests are all within these limits.

### EXAMPLE 2 - analysis 30 minutes and 1, 2 and 4 hours after the loaves were removed from the oven

A subsequent analysis was performed 30 minutes, 1 hour, 2 hours, 3 hours and 4 hours after 16 loaves were removed from the oven, each baked in a respective wrapper according to the present description and following the procedure identified here, and the results were compared with 16 loaves each baked in their currently existing wrapper.

Table 2 below reports the results obtained for force (g) for samples packaged with an existing wrapper and samples packaged with a wrapper described here, while Table 3 reports the results obtained for linear distance for samples packaged with an existing wrapper and samples packaged with a wrapper described here.

| Table 2 | | | | | |
|---|---|---|---|---|---|
| Force (g) | 30 min | 60 min | 120 min | 180 min | 240 min |
| Samples packaged with an existing wrapper | 1681.627 | 2082.248 | 1444.713 | na | na |
| Samples packaged with a wrapper described here | 2252.612 | 2535.564 | 2249.285 | 1852.513 | 1594.87 |
| | | | | | |

| Table 3 | | | | | |
|---|---|---|---|---|---|
| Linear distance | 30 min | 60 min | 120 min | 180 min | 240 min |
| Samples packaged with an existing wrapper | 19.237 | 22.843 | 17.453 | na | na |
| Samples packaged with a wrapper described here | 25.433 | 27.037 | 24.239 | 20.81 | 18.406 |

| | | | | | |
|---|---|---|---|---|---|
| Tables 3 | | | | | |
| Linear distance | 30 min | 60 min | 120 min | 180 min | 240 min |
| Samples packaged with an existing wrapper | 19.237 | 22.843 | 17.453 | na | na |
| Samples packaged with a wrapper described here | 25.433 | 27.037 | 24.239 | 20.81 | 18.406 |

The data show that the bread packaged with the wrapper described here has a greater force and linear distance than the existing wrapper, if analyzed after 30 minutes, but also after 1, 2 and 3 hours. Only after 4 hours does the bread packaged with the wrapper described here reach an average force and a linear distance similar to that of the bread packaged with the currently existing wrapper and analyzed after 30 minutes, that is, an average force of 1600 g and an average linear distance of 19.

Further embodiments concern a packaging comprising at least one gluten-free food product packaged in a packaging wrapper 10 as described here. Favorably, the gluten-free food product has the following crunchiness parameters: force between 2500 and 6000 g, linear distance between 25 and 90. The gluten-free food product as above can be packaged in wrapper 10 in frozen form. Typically, the frozen product, packaged in the wrapper 10, can then be subjected to cooking in an oven. Therefore, it can also be provided, according to this description, that the packaging comprises the wrapper 10 in which the gluten-free food product cooked in the oven is present.

It is clear that modifications and/or additions of parts may be made to the packaging wrapper for food products as described heretofore, without departing from the scope of the present invention, as defined by the claims.

It is also clear that, although the present invention has been described with reference to some specific examples, a person of skill in the art shall certainly be able to achieve many other equivalent forms of packaging wrapper for food products, having the characteristics as set forth in the claims and hence all coming within the scope of protection defined by the appended claims.

## Claims

1. Packaging wrapper for gluten-free food products, said wrapper being suitable for cooking said gluten-free food products in an oven and comprising a multilayer sheet (11), comprising in turn at least one layer of polymeric material (12) having at least one aperture (14) and a layer of filter material (13) coupled, by means of adhesive (15), to the layer of polymeric material (12) and positioned so as to cover said aperture (14), said layer of filter material (13) being porous and comprising a plurality of layers of fibrous material overlapping each other so as to prevent the passage of allergens, in particular gluten, wherein the filter material (13) has a thickness between 50 and 200 µm and the size of the pores of the filter material (13) is between 1 µm and 100 µm.

2. Packaging wrapper as in claim 1, **characterized in that** the polymeric material (12), the filter material (13) and the adhesive (15) are resistant to differences in temperature from -30°C to 250°C for an interval of time from 0 to 2 minutes, in particular from 0 to 30 seconds.

3. Packaging wrapper as in claim 1 or 2, **characterized in that** the layer of filter material (13) is conformed so as to be rough or crinkled.

4. Packaging wrapper as in any claim hereinbefore, **characterized in that** the layer of filter material (13) is distanced by two opposite edges (11B) of the multilayer sheet (11) so as to leave uncovered two flaps (12A) of polymeric material (12).

5. Packaging wrapper as in any claim hereinbefore, **characterized in that** the multilayer sheet (11) comprises two overlapping layers of polymeric material (12) provided with respective apertures (14) overlapping each other, the layer of filter material (13) being disposed between the two layers of polymeric material (12).

6. Packaging wrapper as in any claim hereinbefore, **characterized in that** it comprises inside it a food product, in particular gluten-free, more particularly gluten-free bread.

7. Packaging wrapper as in any claim hereinbefore, wherein the polymeric material (12) is punched.

8. Packaging comprising at least one gluten-free food product packaged in a packaging wrapper as in any claim hereinbefore.

9. Packaging as in claim 8, wherein said gluten-free food product is frozen prior to be subjected to cooking in an oven.

10. Packaging as in claim 8, wherein said gluten-free food product is cooked in an oven.

11. Method to produce, by means of flow pack, a packaging wrapper for gluten-free food products suitable for cooking said gluten-free food products in an oven, said method starting from a multilayer sheet (11) comprising a layer of polymeric material (12) provided with apertures (14) and a layer of filter material (13) coupled, by means of adhesive (15), to the layer of polymeric material (12) and positioned so as to cover said aperture (14), said layer of filter material (13) being porous and comprising a plurality of layers of fibrous material overlapping each other, wherein the filter material (13) has a thickness between 50 and 200 µm, the size of the pores of the filter material (13) is between 1 µm and 100 µm.

12. Method to cook gluten-free food products, said method comprising cooking, in an oven, at least one gluten-free food product already packaged in a packaging wrapper as in any claim from 1 to 7.

13. Method as in claim 11 or 12, wherein said gluten-free food product is in a frozen condition when it is subjected to cooking in an oven.

## Patentansprüche

1. Verpackungshülle für glutenfreie Lebensmittelprodukte, wobei die Hülle zum Garen der glutenfreien Lebensmittelprodukte in einem Ofen geeignet ist und eine mehrschichtige Folie (11) umfasst, die ihrerseits mindestens eine Schicht aus polymerem Material (12) mit mindestens einer Öffnung (14) und eine Schicht aus Filtermaterial (13) aufweist, die mittels Klebstoff (15) mit der Schicht aus polymerem Material (12) gekoppelt und so positioniert ist, dass sie die Öffnung (14) bedeckt, wobei die Schicht aus Filtermaterial (13) porös ist und eine Vielzahl von Schichten aus Fasermaterial aufweist, die einander überlappen, um den Durchtritt von Allergenen, insbesondere Gluten, zu verhindern, wobei das Filtermaterial (13) eine Dicke zwischen 50 und 200 µm hat und die Größe der Poren des Filtermaterials (13) zwischen 1 µm und 100 µm ist.

2. Verpackungshülle nach Anspruch 1, **dadurch gekennzeichnet, dass** das polymere Material (12), das Filtermaterial (13) und der Klebstoff (15) gegenüber Temperaturunterschieden von - 30°C bis 250°C für ein Zeitintervall von 0 bis 2 Minuten, insbesondere von 0 bis 30 Sekunden, beständig sind.

3. Verpackungshülle nach Anspruch 1 oder 2, **dadurch gekennzeichnet, dass** die Schicht aus Filtermaterial (13) so ausgeformt ist, dass sie rau oder zerknittert ist.

4. Verpackungshülle nach einem der vorhergehenden Ansprüche, **dadurch gekennzeichnet, dass** die Schicht aus Filtermaterial (13) durch zwei entgegengesetzte Ränder (11B) der mehrschichtigen Folie (11) beabstandet ist, so dass zwei Laschen (12A) aus polymerem Material (12) unbedeckt bleiben.

5. Verpackungshülle nach einem der vorhergehenden Ansprüche, **dadurch gekennzeichnet, dass** die mehrschichtige Folie (11) zwei sich überlappende Schichten aus polymerem Material (12) aufweist, die mit entsprechenden Öffnungen (14) versehen sind, die sich gegenseitig überlappen, wobei die Schicht aus Filtermaterial (13) zwischen den beiden Schichten aus polymerem Material (12) angeordnet ist.

6. Verpackungshülle nach einem der vorhergehenden Ansprüche, **dadurch gekennzeichnet, dass** sie in ihrem Inneren ein Lebensmittelprodukt, insbesondere glutenfrei, weiter insbesondere glutenfreies Brot, aufweist.

7. Verpackungshülle nach einem der vorhergehenden Ansprüche, wobei das polymere Material (12) gestanzt ist.

8. Verpackung, die mindestens ein glutenfreies Lebensmittelprodukt enthält, das in einer Verpackungshülle nach einem der vorhergehenden Ansprüche verpackt ist.

9. Verpackung nach Anspruch 8, wobei das glutenfreie Lebensmittelprodukt gefroren ist bevor es einem Garen in einem Ofen ausgesetzt ist.

10. Verpackung nach Anspruch 8, wobei das glutenfreie Lebensmittelprodukt in einem Ofen gegart wird.

11. Verfahren zur Herstellung einer Verpackungshülle für glutenfreie Lebensmittelprodukte in schlauchbeutelartiger Weise, die zum Garen der glutenfreien Lebensmittelprodukte in einem Ofen geeignet ist, wobei das Verfahren von einer mehrschichtigen Folie (11) ausgeht, die eine Schicht aus polymerem Material (12), die mit Öffnungen (14) versehen ist, und eine Schicht aus Filtermaterial (13) aufweist, die mittels eines Klebstoffes (15) mit der Schicht aus polymerem Material (12) gekoppelt ist und so angeordnet ist, dass sie die Öffnung (14) bedeckt, wobei die Schicht aus Filtermaterial (13) porös ist und eine Vielzahl von Schichten aus Fasermaterial umfasst, die einander überlappen, wobei das Filtermaterial (13) eine Dicke zwischen 50 und 200 µm hat und die Größe der Poren des Filtermaterials (13) zwischen 1 µm und 100 µm ist.

12. Verfahren zum Garen von glutenfreien Lebensmittelprodukten, wobei das Verfahren das Garen mindestens eines glutenfreien Lebensmittelprodukts, das bereits in einer Verpackungshülle nach einem der Ansprüche 1 bis 7 verpackt ist, in einem Ofen umfasst.

13. Verfahren nach Anspruch 11 oder 12, wobei sich das glutenfreie Lebensmittelprodukt in einem gefrorenen Zustand befindet, wenn es dem Garen in einem Ofen ausgesetzt wird.

## Revendications

1. Enveloppe d'emballage pour produits alimentaires sans gluten, ladite enveloppe étant adaptée à la cuisson desdits produits alimentaires sans gluten dans un four et comprenant une feuille multicouche (11), comprenant à son tour au moins une couche de matériau polymère (12) présentant au moins une ouverture (14) et une couche de matériau filtrant (13) couplée, au moyen d'un adhésif (15), à la couche de matériau polymère (12) et positionnée de manière à recouvrir ladite ouverture (14), ladite couche de matériau filtrant (13) étant poreuse et comprenant une pluralité de couches de matériau fibreux se chevauchant de manière à empêcher le passage des allergènes, en particulier du gluten, le matériau filtrant (13) ayant une épaisseur comprise entre 50 et 200 µm et la taille des pores du matériau filtrant (13) étant comprise entre 1 µm et 100 µm.

2. Enveloppe d'emballage selon la revendication 1, **caractérisée en ce que** le matériau polymère (12), le matériau filtrant (13) et l'adhésif (15) sont résistants à des différences de température allant de -30°C à 250°C pendant un intervalle de temps allant de 0 à 2 minutes, en particulier de 0 à 30 secondes.

3. Enveloppe d'emballage selon la revendication 1 ou 2, **caractérisée en ce que** la couche de matériau filtrant (13) est conformée de manière à être rugueuse ou froissée.

4. Enveloppe d'emballage selon l'une quelconque des revendications précédentes, **caractérisée en ce que** la couche de matériau filtrant (13) est écartée par deux bords opposés (11B) de la feuille multicouche (11) de manière à laisser à découvert deux rabats (12A) de matériau polymère (12).

5. Enveloppe d'emballage selon l'une quelconque des revendications précédentes, **caractérisée en ce que** la feuille multicouche (11) comprend deux couches se chevauchant de matériau polymère (12) pourvues d'ouvertures respectives (14) se chevauchant l'une l'autre, la couche de matériau filtrant (13) étant disposée entre les deux couches de matériau polymère (12).

6. Enveloppe d'emballage selon l'une quelconque des revendications précédentes, **caractérisée en ce qu'**elle comprend à l'intérieur un produit alimentaire, en particulier sans gluten, plus particulièrement du pain sans gluten.

7. Enveloppe d'emballage selon l'une quelconque des revendications précédentes, dans laquelle le matériau polymère (12) est perforé.

8. Emballage comprenant au moins un produit alimentaire sans gluten emballé dans une enveloppe d'emballage selon l'une quelconque des revendications précédentes.

9. Emballage selon la revendication 8, dans lequel ledit produit alimentaire sans gluten est congelé avant d'être soumis à une cuisson au four.

10. Emballage selon la revendication 8, dans lequel ledit produit alimentaire sans gluten est cuit au four.

11. Procédé de fabrication, par flow pack, d'une enveloppe d'emballage pour produits alimentaires sans gluten adaptée à la cuisson au four desdits produits alimentaires sans gluten, ledit procédé partant d'une feuille multicouche (11) comprenant une couche de matériau polymère (12) pourvue d'ouvertures (14) et une couche de matériau filtrant (13) couplée, au moyen d'un adhésif (15), à la couche de matériau polymère (12) et positionnée de manière à recouvrir ladite ouverture (14), ladite couche de matériau filtrant (13) étant poreuse et comprenant une pluralité de couches de matériau fibreux se chevauchant, le matériau filtrant (13) ayant une épaisseur comprise entre 50 et 200 µm, la taille des pores du matériau filtrant (13) étant comprise entre 1 µm et 100 µm.

12. Procédé de cuisson de produits alimentaires sans gluten, ledit procédé comprenant la cuisson, dans un four, d'au moins un produit alimentaire sans gluten déjà conditionné dans une enveloppe d'emballage selon l'une quelconque des revendications 1 à 7.

13. Procédé selon la revendication 11 ou 12, dans lequel le produit alimentaire sans gluten est à l'état congelé lorsqu'il est soumis à une cuisson au four.
